# EUROPÄISCHE PATENTANMELDUNG

(11) **EP 0 574 740 A1**
(43) Veröffentlichungstag der Anmeldung: **22.12.1993**
(21) Anmeldenummer: 93108409.9
(22) Anmeldetag: 25.05.1993
(51) Int. Cl.: A01M 7/00

(54) **Vorrichtung zum Ausbringen von Behandlungsflüssigkeit auf Pflanzenreihen**

(30) Priorität: 26.05.1992 DE 9207095 U; 02.02.1993 DE 9301379 U
(71) Anmelder: Josef Willmes GmbH i.K., D-6140 Bensheim 1 (DE)
(72) Erfinder: Walter, Ernst, W-6749 Pleisweiler-Oberhofen (DE)

(57) **Zusammenfassung**

Gegenstand der Erfindung sind Vorrichtungen zum Ausbringen von Behandlungsflüssigkeiten auf in parallelen Reihen wachsende Pflanzen (1) zur Anwendung im Weinbau, Landwirtschaft und Forstwirtschaft, konstruiert als Aufsatz (20') für fahrbare Untersätze, beispielsweise den Maschinenkopf (10') eines Traubenvollernters.

Der Aufsatz (20') besteht aus einem stabilen Rahmen (21) mit Füßen (22), an dem quer zur Fahrtrichtung eine mehrteilige, wenigstens einfach teleskopierbare Traverse (25, 26, 29) montiert ist. Am Rahmen (21) bzw. an der Traverse (25, 26, 29) sind Gebläse (50.2, 50.3, 50.4) und Recycling-Schirme (40.2, 40.3, 40.4) befestigt. An den Gebläsen (50.2, 50.3, 50.4) und/oder den Recycling-Schirmen (40.2, 40.3, 40.4) sind Düsen (52', 52'') montiert, mit deren Hilfe die Behandlungsflüssigkeit in den Luftstrom eingesprüht wird. Bei korrekter Zuordnung von Gebläsen und Recycling-Schirmen wird der Teil der Behandlungsflüssigkeit, der sich nicht auf den Pflanzen (1) niedergeschlagen hat, in den Recycling-Schirmen abgeschieden und kann in die auf dem Aufsatz (20') mitgeführten Tanks (60.1, 60.2) zurückgepumpt und wiederverwendet werden.

## Beschreibung

Die Erfindung betrifft Vorrichtungen zum Ausbringen von Behandlungsflüssigkeit auf in parallelen Reihen wachsende Pflanzen, insbesondere im Weinbau, im Obstbau, im Hopfenbau, in der Forstwirtschaft sowie im Tomaten- und/oder Gemüseanbau gemäß dem Oberbegriff des Anspruchs 1.

Aus der EP-A-0 327 037, der EP-C-0 382 885, der DE-U-89 06 405 bzw. der DE-U-92 07 095 sind fahrbare Spritzgeräte bekannt, welche speziell zum Behandeln von parallelen Pflanzenreihen im Wein- oder Obstbau geeignet sind. Ihnen gemeinsam sind ein oder mehrere Gebläse, die einen starken, auf die Pflanzenreihen gerichteten Luftstrom erzeugen, Düsen, die eine Behandlungsflüssigkeit in den Luftstrom einspritzen, sowie ein die Pflanzenreihen übergreifendes Gestänge, an dem Recycling-Schirme hängen, die einen mehr oder weniger großen Anteil der Behandlungsflüssigkeit, die sich nicht auf den Pflanzenreihen niedergeschlagen hat, aus der Luftströmung abscheiden, so daß sie aus einer Flüssigkeitssammelrinne am unteren Ende der Recycling-Schirme in den auf dem Fahrzeug mitgeführten Tank zurückgefördert werden kann.

Bei den Recycling-Schirmen unterscheidet man zwei Konstruktionen: die Reflektor-Schirme und die Kollektor-Schirme. Die Reflektor-Schirme bestehen im wesentlichen aus aerodynamisch gekrümmten Blechen, die die mit Flüssigkeit beladene Luftströmung gezielt auf die Rückseite der Pflanzenreihen umlenken. Ein erster Anteil der Flüssigkeit scheidet sich dabei am Schirm, ein zweiter Anteil an der Rückseite der Pflanzenreihe ab. Ein Rest der Flüssigkeit ist jedoch verloren und belastet die Umwelt. Außerdem wird die Rückseite der Pflanzenreihe nur mit einer reduzierten Chemikalienmenge behandelt, da der am Schirm abgeschiedene erste Anteil fehlt. Ein weiterer Nachteil ist, daß aufgrund der aerodynamischen Gegebenheiten die Reflektor-Schirme weit hinter dem Fahrzeug positioniert werden müssen, wodurch das Wenden des Fahrzeugs am Ende der Pflanzenreihen sehr erschwert ist.

Demgegenüber zeigen die in der EP-C-0 382 885 beschriebenen Kollektor-Schirme erheblich günstigere Eigenschaften. Diese Schirme arbeiten am besten, wenn die flüssigkeitsbeladene Luftströmung praktisch senkrecht auf die Schirmoberfläche trifft. Man erhält so kurze Fahrzeuge, die im Gelände gut zu manipulieren sind. Darüber hinaus ist die Abscheidungsrate bei diesem Schirmtyp praktisch 100 %, so daß nur noch die Anteile der Flüssigkeit, die durch äußere Umstände am Kollektor-Schirm vorbeigelenkt werden, verloren sind. Außerdem wird jede Seite der Pflanzenreihe nacheinander gezielt und gleich dosiert behandelt.

Dieses vorbekannte Gerät hat als wesentlichen Vorteil eine maximale Umweltfreundlichkeit bzw. einen minimalen Wasserverbrauch. Allerdings ist das bekannte Gerät nur als Anhänger hinter landwirtschaftlichen Zugfahrzeugen konzipiert.

Seit einiger Zeit sind im Weinbau Traubenvollernter im Einsatz. Diese besitzen ein spezielles, sehr hochbeiniges Fahrwerk und können so die Rebzeilen überfahren. Diese Traubenvollernter werden derzeit nur während der Weinlese im Herbst eingesetzt; die restliche Zeit des Jahres stehen sie unbenutzt in der Garage. In anderen Bereichen der Landwirtschaft sieht es ähnlich aus.

Ausgehend von dem genannten Stand der Technik liegt der vorliegenden Erfindung die Aufgabe zugrunde, Vorrichtungen der eingangs genannten Art zum umweltschonenden Ausbringen von Behandlungsflüssigkeit auf in parallelen Reihen wachsende Pflanzen, insbesondere im Weinbau, aber auch in der Land- und Forstwirtschaft anzugeben, die zur Verwendung mit beliebigen fahrbaren Untersätzen, gleichgültig ob selbstfahrend oder gezogen, geeignet sind.

Diese Aufgabe wird gelöst durch eine gattungsgemäße Vorrichtung mit den Merkmalen gemäß Kennzeichen des Anspruchs 1.

Damit ergeben sich die Vorteile, daß sich die fahrbaren Untersätze, bei denen es sich um einen von einer Zugmaschine gezogenen Nachläufer, um den Maschinenkopf eines Traubenvollernters oder um eine Neukonstruktion handeln kann, nicht mehr wie bisher nur selten, beispielsweise nur während der Weinlese, sondern während des ganzen Jahres einsetzen lassen. Dadurch wird ein erster kostensenkender Rationalisierungseffekt erzielt. Weiterhin lassen sich in einem Arbeitsgang drei Pflanzenreihen gleichzeitig behandeln, und zwar je nach der Art, Zahl und Position von Gebläsen und Recycling-Schirmen einseitig und/oder zweiseitig. In allen Fällen erreicht man eine hohe Recyclingrate der Behandlungsflüssigkeit bzw. einen minimalen Wasserverbrauch, was besonders in Ländern mit wenig Wasser von extremer Bedeutung ist. Dank der Teleskopierbarkeit bzw. Schwenkbarkeit der Traversen wird eine akzeptable Straßenfahrbreite sowie eine einfache Anpassung an unterschiedliche Abstände der Pflanzenreihen erreicht.

Gemäß einer vorteilhaften Weiterbildung der Erfindung besitzt die Traverse zwei parallele Arme übereinander, die mit den Haltern der äußeren Gebläse und Recycling-Schirme eine Parallelführung bilden. Auf diese Weise ist ein Höhenausgleich möglich, wenn das Gerät am Hang fährt und das Fahrwerk der Hanglage entsprechend verstellt wird. Die Gebläse und Recycling-Schirme hängen jedoch immer senkrecht, d. h. exakt parallel zu den Pflanzenreihen.

Gemäß einer ersten Alternative ist jede Traverse auf jeder Seite zweifach teleskopierbar, wobei an jedem Teleskop-Auszug ein pneumatischer, hydraulischer bzw. elektrischer Antrieb angreift, insbesondere ein Teleskopzylinder.

Alternativ dazu ist jede Traverse auf jeder Seite einfach teleskopierbar, wobei an den äußeren Enden der Teleskop-Auszüge Schwenkvorrichtungen vorgesehen sind, an denen Schwenkarme gelagert sind, an deren Enden die äußeren Recycling-Schirme hängen.

Vorzugsweise sind diese äußeren parallelen Schwenkarme sowohl in der horizontalen als auch in der vertikalen Ebene zueinander versetzt. Dadurch bilden sie sowohl ein horizontales als auch ein vertikales Parallelogramm, so daß die Gebläse und die Schirme in jeder beliebigen horizontalen oder vertikalen Schwenkposition der Traversen immer senkrecht hängen.

Zum Ein- und Ausfahren der äußeren Teleskoparme und zum Schwenken der Traverse bzw. der äußeren Schwenkarme können an sich bekannte pneumatische, hydraulische bzw. elektrische Antriebe vorgesehen sein. Hydraulik-Zylinder ermöglichen lange Hubwege; Hydraulik-Schwenkmotoren bauen sehr kompakt und ermöglichen große Schwenkwinkel.

Es versteht sich, daß der Traubenernteaufsatz vor dem Aufsetzen des erfindungsgemäßen Gerätes abgenommen wird. Dies ist bereits werksseitig vorgesehen. Der erfindungsgemäße Aufsatz ist zu demselben Zweck mit Füßen und speziellen Ösen ausgerüstet, an denen Stelzen befestigt werden können, so daß der fahrbare Untersatz mit eigener Kraft montiert bzw. demontiert werden kann.

Aufgrund der erfindungsgemäßen Konstruktion ist der Aufsatz ohne große Änderungen für praktisch alle fahrbaren Untersätze, gleichgültig ob selbstfahrend oder gezogen geeignet, ebenso zur Verwendung mit allen Recycling-Schirmtypen, gleichgültig ob Reflektor-Schirm oder Kollektor-Schirm.

Diese und weitere Ausgestaltungen der Erfindung sind Gegenstand der Unteransprüche. Sie und ihre Vorteile sollen anhand der Zeichnung in Form von Ausführungsbeispielen näher erläutert werden. Es zeigen jeweils in schematischer Darstellung:
- Fig. 1: eine Ansicht eines ersten Aufsatzes von der Rückseite,
- Fig. 2: einen Längsschnitt durch einen Vollernter mit dem Aufsatz nach Fig. 1,
- Fig. 3: einen Teil der Installation für die Behandlungsflüssigkeit,
- Fig. 4: einen Blick auf das Heck eines Traubenvollernters mit einem anderen Aufsatz zum Ausbringen von Chemikalien auf in parallelen Reihen wachsende Pflanzen in Arbeitsstellung,
- Fig. 5: eine Seitenansicht des Geräts der Fig. 4 in Arbeitsstellung,
- Fig. 6: eine Seitenansicht des Geräts der Fig. 4 in Transportstellung,
- Fig. 7: eine Ansicht eines Reflektor-Schirms als Beispiel eines Recycling-Schirms und
- Fig. 8: eine Draufsicht auf den Schirm der Fig. 7.

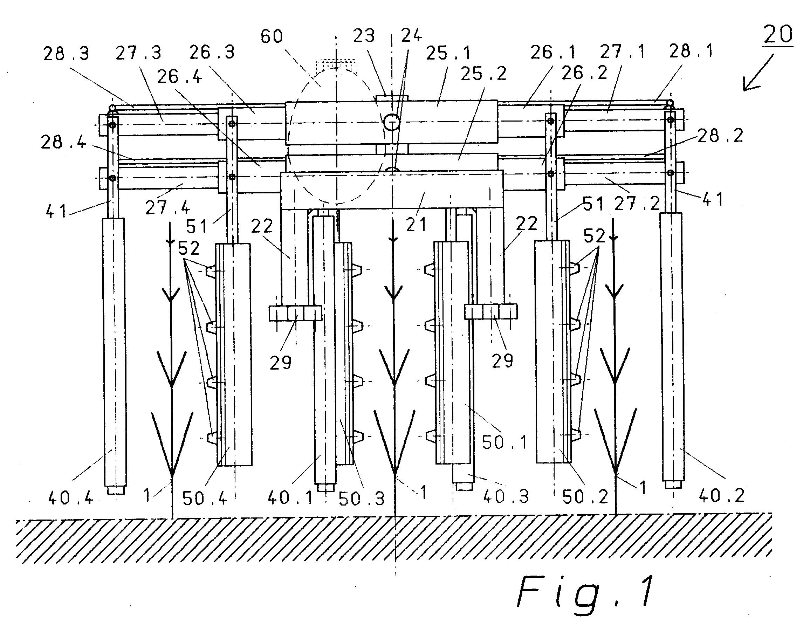

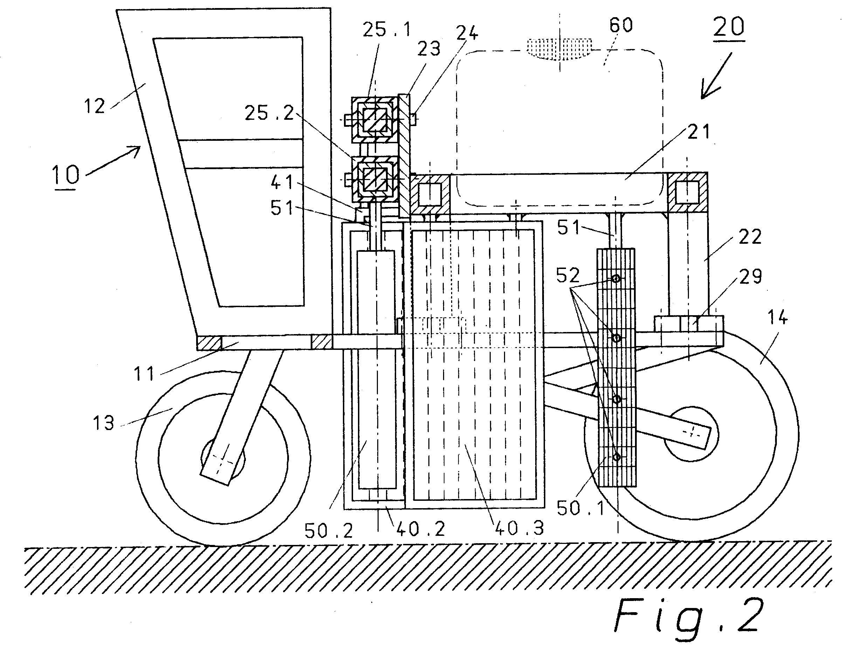

Fig. 1 als Ansicht von der Rückseite und Fig. 2 als Längsschnitt zeigen einen Aufsatz 20 für einen Traubenvollernter 10, der alle Bestandteile zum Behandeln von in parallelen Reihen wachsenden Pflanzen 1 im Weinbau umfaßt.

Der Vollernter 10 besitzt ein Chassis 11, eine Kabine 12 für den Fahrzeugführer sowie ein dem Einsatzzweck angepaßtes hochbeiniges Fahrwerk mit einem lenkbaren Vorderrad 13 und einem angetriebenen Hinterrad 14.

Der Aufsatz 20 besteht im wesentlichen aus einem Rahmen 21 mit beispielsweise vier stabilen Füßen 22, die in geeigneter Weise lösbar mit dem Chassis 11 des Vollernters 10 verbunden werden. Ösen 29 an den Füßen 22 erlauben die Befestigung von Stelzen. Nach Montage dieser Stelzen kann der Vollernter 10 nach Absenken seines Fahrwerks aus eigener Kraft unter dem Aufsatz 20 herausfahren bzw. zwecks Montage des Aufsatzes 20 wieder unter den Aufsatz 20 hineinfahren.

An der Frontseite des Rahmens 21 befindet sich eine Konsole 23, an der übereinander quer zur Fahrtrichtung zwei Traversen 25.1, 25.2 montiert sind, und zwar mit Hilfe von Achsen 24, so daß die Traversen 25.1, 25.2 quer zur Fahrtrichtung schwenkbar sind. Die entsprechenden Schwenkzylinder sind der Übersichtlichkeit halber nicht eingezeichnet.

Die Traversen 25.1, 25.2 sind nach rechts und nach links zweifach teleskopierbar. An den ersten Teleskopauszügen 26.1 ... 26.4 hängt rechts und links je ein äußeres Gebläse 50.2, 50.4, im vorliegenden Ausführungsbeispiel ein Tangentialgebläse. An den zweiten Teleskopauszügen 27.1 ... 27.4 hängt je ein äußerer Recycling-Schirm 40.2, 40.4.

Unter dem Rahmen 21 des Aufsatzes 20 hängen rechts und links jeweils ein innerer Schirm 40.1, 40.3 und ein inneres Gebläse 50.1, 50.3. Jeweils ein Schirm 40.1, 40.3 und ein Gebläse 50.1, 50.3 stehen einander gegenüber. Auf diese Weise wird verhindert, daß die von den inneren Gebläsen 50.1, 50.3 erzeugten Luftströmungen sich treffen und gegenseitig stören.

Wie insbesondere Fig. 1 erkennen läßt, sind die Aufhängungen 41 der äußeren Schirme 40.2, 40.4 sowie die Aufhängungen 51 der äußeren Gebläse 50.2, 50.4 mit den beiden Traversen 25, 26, 27 unter Bildung einer Parallelogrammführung gelenkig verbunden. Dadurch besteht die Möglichkeit, die Traversen 25, 26, 27 und alle daran sich befindenden Bestandteile gegenüber dem Rahmen 21 und damit gegenüber dem Chassis 11 des Vollernters 10 zu verschwenken. Dies ist bei einer Fahrt am Hang erforderlich, um zu verhindern, daß die bergseitig angeordneten Schirme bzw. Gebläse auf dem Boden aufsitzen.

Die Gebläse 50.1 ... 50.4 sind jeweils mit einer Anzahl von Zerstäuberdüsen 52 ausgerüstet. Diese können wie in der Zeichnung dargestellt direkt im Zentrum der Gebläse 40 positioniert sein. Es ist jedoch auch eine Positionierung der Zerstäuberdüsen 52' seitlich neben den Gebläsen 40 möglich, wobei die Flüssigkeit unter spitzem Winkel in den Luftstrom eingespritzt wird. Die zerstäubte Behandlungsflüssigkeit wird von der in den Gebläsen 50.1 ... 50.4 erzeugten starken Luftströmung auf die Pflanzenreihen 1 gerichtet, die sich jeweils zwischen Gebläse und Schirm befinden. Der Teil an Flüssigkeit, der sich nicht auf den Pflanzen 1 niederschlägt und der beispielsweise bei der Frühjahrsspritzung sehr hoch ist, wird von den Schirmen 40.1 ... 40.4 aufgefangen, abgeschieden, gesammelt und in den Vorratstank 60 zurückgesaugt.

Zum Betätigen der Teleskopauszüge 26, 27 sind jeweils Hydraulikzylinder vorgesehen, die vom Fahrzeugführer betätigt werden. Um die Übersichtlichkeit der Zeichnung nicht zu stören, sind lediglich die Hydraulikzylinder 28.1 ... 28.4 zum Betätigen der äußeren Teleskopauszüge 27.1 ... 27.4 dargestellt.

Zwecks Erhöhung der Übersichtlichkeit sind weder die Hydraulikleitungen noch die Pumpe oder die Leitungen zum Zuführen der Behandlungsflüssigkeit zu den Spritzdüsen 52 oder die Rücksaugleitungen von den Schirmen 40 zum Tank 60 eingezeichnet.

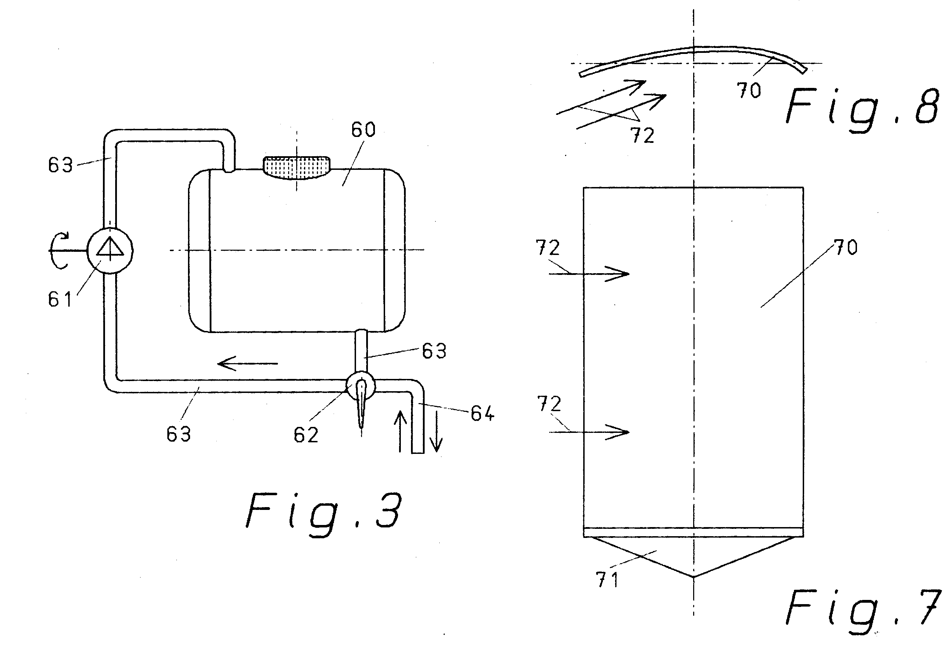

Fig. 3 zeigt rein schematisch einen Teil der Rohrleitungen für die Behandlungsflüssigkeit. Man erkennt den Vorratstank 60 sowie eine Pumpe 61, die über eine im Ring geführte Rohrleitung 63 miteinander verbunden sind. Die hinter der Pumpe 61 vorzusehende Abzweigung zu den Zerstäuberdüsen 52 ist nicht dargestellt. In die Rohrleitung 63 hinter dem Tank 60 ist ein Drei-Wege-Ventil 62 eingebaut. Von diesem zweigt ein Rohrstutzen 64 ab. Dieser Rohrstutzen 64 ermöglicht in Verbindung mit dem Drei-Wege-Ventil 62 nicht nur das Entleeren des Tanks 60, sondern insbesondere das Füllen desselben, und zwar mit Hilfe der bordeigenen Pumpe 61. Es ist also nicht mehr wie bisher erforderlich, daß der Fahrzeugführer den Tank 60 durch den obenliegenden Verschlußdeckel befüllt, was angesichts der Höhe, in der sich der Deckel befindet, eine erhebliche Arbeitserleichterung mit sich bringt.

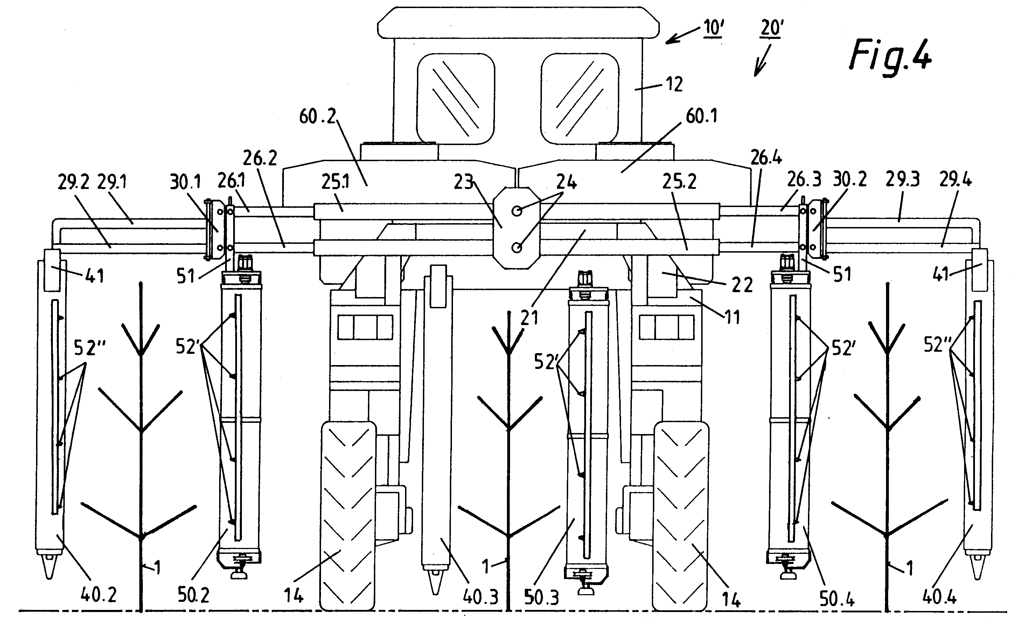

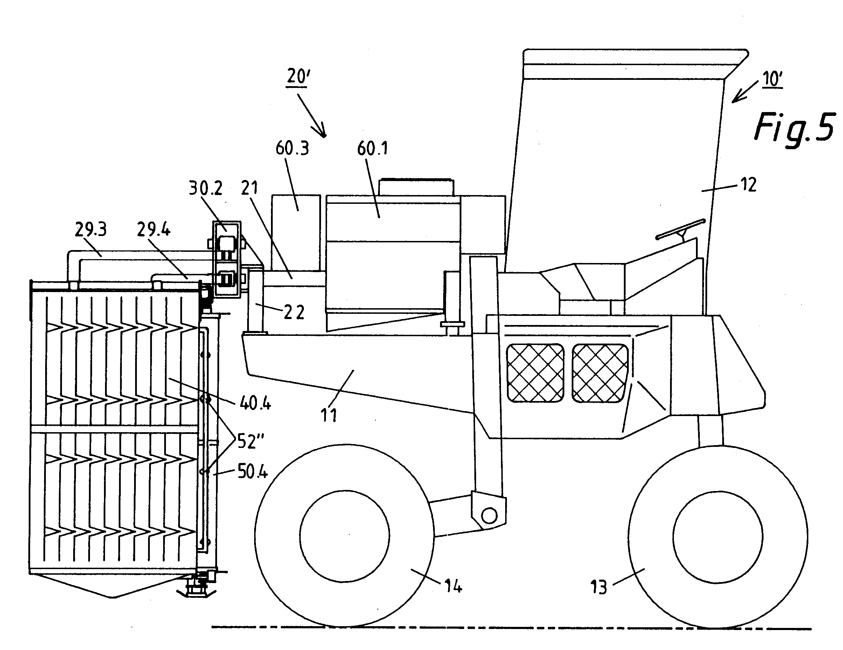

Die Fig. 4 und 5 zeigen einen fahrbaren Untersatz 10' mit aufgesatteltem Aufsatz 20', der ebenfalls alle Komponenten enthält, die zum Ausbringen von Behandlungsflüssigkeit auf in parallelen Reihen wachsende Pflanzen 1 bei gleichzeitigem Recycling der nicht auf den Pflanzenreihen niedergeschlagenen Flüssigkeit enthält, wobei alle Komponenten in Arbeitsstellung dargestellt sind.

Der Aufsatz 20' besteht wieder aus einem stabilen Rahmen 21 mit beispielsweise vier Füßen 22, die kraft-, reib- oder formschlüssig mit dem Chassis 11 verbunden werden. Die Füße 22 sind zu diesem Zweck mit Verriegelungen, Bajonett-Verschlüssen, Flanschen, Schraubverbindungen oder dergleichen ausgerüstet. Auf dem Rahmen 21 sitzen große Tanks 60.1, 60.2 für die Behandlungsflüssigkeit, ein kleinerer Frischwassertank 60.3 sowie eine Pumpe (nicht dargestellt).

Des weiteren ist am Rahmen 21 hinter dem Heck des Fahrzeugs 10 eine Traverse 25 mit zwei übereinander angeordneten Teleskoparmen 25.1, 25.2 mittels Schwenkplatte 23 und Schwenkachsen 24 schwenkbar gelagert. An den Enden der Teleskop-Auszüge 26.1 ... 26.4 sind Schwenkvorrichtungen 30.1, 30.2 gelagert, an denen äußere Schwenkarme 29.1 ... 29.4 angelenkt sind. Zum Teleskopieren der Teleskoparme 25, 26 sind Teleskopzylinder, zum Schwenken der Traverse 25, 26 und der Schwenkarme 29 Hydraulik-Schwenkmotoren vorgesehen. Diese sind jedoch nicht dargestellt, um die Übersichtlichkeit der Zeichnung zu erhalten.

An den äußeren Enden der Schwenkarme 29.1 ... 29.4 hängt mittels geeigneter Halterungen 41 je ein Recycling-Schirm 40.2, 40.4, wobei Gebläse und Recycling-Schirm jeweils so zueinander positioniert sind, daß die Luftströmung unter Berücksichtigung der Fahrgeschwindigkeit und der durch die Pflanzen bewirkten Ablenkungen im aerodynamisch richtigen Winkel auf den Recycling-Schirm trifft.

Wie dieses Ausführungsbeispiel zeigt, können die Düsen 52, 52' nicht nur direkt vor den Gebläsen 50 montiert werden, sondern auch seitlich daneben. Außerdem können Düsen 52'' seitlich vorn an den äußeren Schirmen 40.2, 40.4 montiert werden; dadurch wird auch die Rückseite der äußeren Pflanzenreihen 1 besprüht.

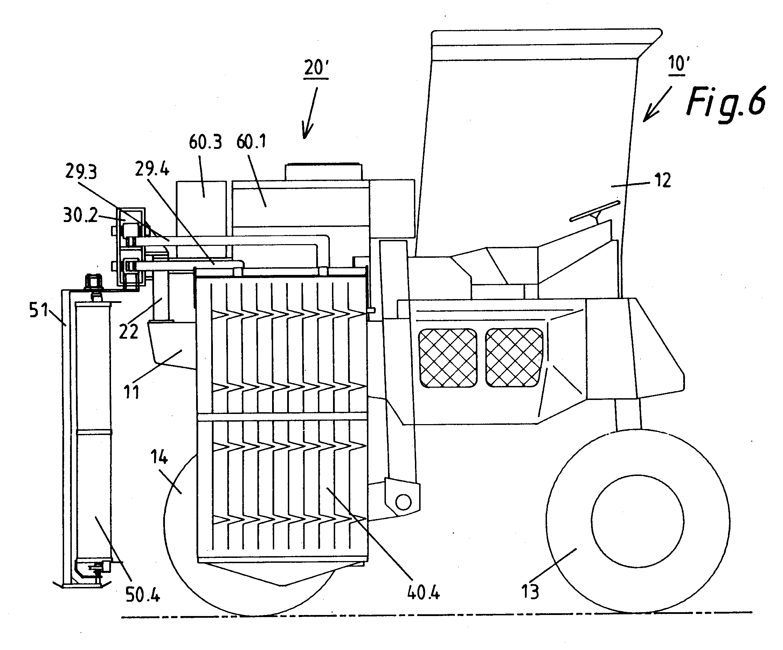

Wie Fig. 4 zeigt, sind während des Betriebs die äußeren Gebläse 50.2, 50.4 und Recycling-Schirme 40.2, 40.4 entsprechend der Abstände der Pflanzenreihen ausgefahren bzw. ausgeschwenkt, wobei Fig. 5 erkennen läßt, daß die äußeren Recycling-Schirme 40.2, 40.4 hinter das Heck des Fahrzeugs 10' geschwenkt sind. Wie Fig. 6 erkennen läßt, ist es jedoch für den Straßentransport möglich, die äußeren Gebläse 50.2, 50.4 an das Chassis 11 beizuziehen und die äußeren Recycling-Schirme 40.2, 40.4 gleichzeitig vor die Hinterachse zu schwenken, wodurch für den Straßentransport akzeptable Abmessungen und Fahreigenschaften erreicht werden.

Schließlich besteht sogar die Möglichkeit, die äußeren Schirme 40.2, 40.4 und Gebläse 50.2, 50.4 oben auf das Deck des Fahrzeugs 10, 10' zu legen, wie Flügel von Insekten.

Da die Kollektor-Schirme aus parallelen Lamellen mit W-förmigem Querschnitt in der eingangs erwähnten EP-C-0 382 885 ausführlich beschrieben sind, erübrigt sich hier eine ausführliche Beschreibung von Aufbau und Wirkungsweise. Stattdessen soll anhand der Fig. 7 und 8 ein Reflektor-Schirm erläutert werden. Der Reflektor-Schirm 70 besteht aus einem rechteckigen Blechstück, welches aerodynamisch gebogen ist. Wenn die mit Behandlungsflüssigkeit beladene Luftströmung 72 unter dem aerodynamisch richtigen Winkel auf den Reflektor-Schirm 70 trifft, scheidet sich ein Anteil der Flüssigkeit am Schirm 70 ab und kann aus einer Sammelrinne 71 abgezogen werden. Die Luftströmung 72 mit dem darin enthaltenen Rest an Flüssigkeit wird umgelenkt auf die Rückseite der Pflanzenreihe, so daß auch diese mit behandelt wird, wenn auch mit einer reduzierten Menge.

Dank der Konzeption der erfindungsgemäßen Vorrichtung als Aufsatz 20, 20' läßt sie sich mit beliebigen fahrbaren Untersätzen 10, 10' verwenden, gleichgültig ob diese wie in den Ausführungsbeispielen selbstfahrend oder wie im Stand der Technik beschrieben gezogen sind. Darüber hinaus ist die Konstruktion einfach und betriebssicher sowie derart flexibel, daß alle Arten von Gebläsen und Recycling-Schirmen verwendet werden können.

## Patentansprüche

1. Vorrichtung zum Ausbringen von Behandlungsflüssigkeit auf in parallelen Reihen wachsende Pflanzen, insbesondere im Weinbau, im Obstbau, im Hopfenbau, in der Forstwirtschaft sowie im Tomaten- und/oder Gemüseanbau, umfassend
- einen Tank (60) zur Aufnahme und
- eine Pumpe (61) zum Zerstäuben der Behandlungsflüssigkeit mittels Zerstäuberdüsen (52),
- Gebläse (50) zum Erzeugen einer starken, auf die Pflanzen (1) gerichteten Luftströmung, die die Behandlungsflüssigkeit verwirbelt,
- auf der Rückseite der Pflanzenreihen (1) positionierte Recycling-Schirme (40; 70) mit einer Flüssigkeitssammelrinne und einer Rücksaugleitung zum Tank (60),
gekennzeichnet durch die Merkmale:
- die Vorrichtung ist als Aufsatz (20) für einen fahrbaren Untersatz (10), z. B. den Maschinenkopf eines Traubenvollernters, konzipiert,
- ein Rahmen (21) ist vorgesehen,
- an dem Rahmen (21) ist quer zur Fahrtrichtung wenigstens eine mehrteilige, wenigstens einfach teleskopierbare Traverse (25, 26, 27, 29) montiert,
-- an einem zweiten Traversenteil (26.1, 26.3) ist ein äußeres Gebläse (50.2, 50.4),
-- an einem dritten Traversenteil (27.1, 27.3; 29.1, 29.3) ist ein äußerer Schirm (40.2, 40.4; 70) befestigt,
- unter dem Rahmen (21) sind rechts und links hintereinander je ein inneres Gebläse (50.1, 50.3) und je ein innerer Schirm (40.1, 40.3; 70) befestigt,
-- je ein Gebläse (50.1, 50.3; 50.2, 50.4) und je ein Schirm (40.1, 40.3; 40.2, 40.4; 70) stehen sich gegenüber.

2. Vorrichtung nach Anspruch 1, gekennzeichnet durch die Merkmale:
- die Traverse (25, 26, 27, 29) ist um eine zentrale Achse (24) schwenkbar,
- sie besitzt parallele Arme (25.1, 25.2, 26.1 ... 26.4, 27.1 ... 27.4, 29.1 ... 29.4), die mit den Haltern (41, 51) der äußeren Gebläse (50.2, 50.4) und Recycling-Schirme (40.2, 40.4; 70) eine Parallelführung bilden.

3. Vorrichtung nach Anspruch 1 oder 2, gekennzeichnet durch die Merkmale:
- jede Traverse (25, 26, 27) ist auf jeder Seite zweifach teleskopierbar,
- an jedem Teleskop-Auszug (26, 27) greift ein pneumatischer, hydraulischer bzw. elektrischer Antrieb an, insbesondere ein Teleskopzylinder (28).

4. Vorrichtung nach Anspruch 1 oder 2, gekennzeichnet durch die Merkmale:
- jede Traverse (25, 26, 29) ist auf jeder Seite einfach teleskopierbar,
- an den äußeren Enden der Teleskop-Auszüge (26) sind Schwenkvorrichtungen (30) vorgesehen,
- an den Schwenkvorrichtungen (30) sind Schwenkarme (29) gelagert, an deren Enden die äußeren Recycling-Schirme (40.2, 40.4, 70) hängen.

5. Vorrichtung nach Anspruch 4, gekennzeichnet durch das Merkmal:
- die parallelen Schwenkarme (29.1 ... 29.4) sind sowohl horizontal als auch vertikal zueinander versetzt.

6. Vorrichtung nach einem der Ansprüche 1 bis 5, gekennzeichnet durch das Merkmal:
- zum Schwenken der Traverse (25, 26, 27) und/oder der Schwenkarme (29) sind Pneumatische, hydraulische bzw. elektrische Antriebe vorgesehen, insbesondere jeweils ein Hydraulik-Motor.

7. Vorrichtung nach einem der Ansprüche 1 bis 6, gekennzeichnet durch die Merkmale:
- es sind zwei Tanks (60; 60.1, 60.2) für Behandlungsflüssigkeit und gegebenenfalls
- ein Tank (60.3) für Frischwasser vorgesehen.

8. Vorrichtung nach einem der Ansprüche 1 bis 7, gekennzeichnet durch das Merkmal:
- die Traverse (25, 26, 27, 29) ist hinter dem Führerhaus (12), vorzugsweise am Heck des fahrbaren Untersatzes (10) positioniert.

9. Vorrichtung nach einem der Ansprüche 1 bis 8, gekennzeichnet durch die Merkmale:
- die Recycling-Schirme sind Kollektor-Schirme (40),
- jeder Kollektor-Schirm (40) besitzt parallele Lamellen mit W-förmigem Querschnitt, die die Luftströmung mehrfach umlenken.

10. Vorrichtung nach einem der Ansprüche 1 bis 8, gekennzeichnet durch das Merkmal:
- die Recycling-Schirme sind Reflektor-Schirme (70), die die Luftströmung (72) umlenken, so daß sie von hinten nochmals auf die Pflanzenreihe (1) trifft.

11. Vorrichtung nach einem der Ansprüche 1 bis 10, gekennzeichnet durch die Merkmale:
- Düsen (52) sind zentral vor den Gebläsen (50) und/oder
- Düsen (52') sind seitlich neben den Gebläsen (50) und/oder
- Düsen (52'') sind seitlich neben den äußeren Schirmen (40.2, 40.4) positioniert,
-- die seitlichen Düsen (52', 52'') spritzen unter einem spitzen Winkel in die Luftströmung.

12. Vorrichtung nach einem der Ansprüche 1 bis 11, gekennzeichnet durch die Merkmale:
- der Rahmen (21) besitzt Füße (22),
- an den Füßen (22) sind Ösen (29) für Stelzen vorgesehen.

13. Vorrichtung nach einem der Ansprüche 1 bis 12, gekennzeichnet durch die Merkmale:
- zwischen Tank (60) und Pumpe (61) ist eine Rohrleitung (63) im Kreislauf verlegt,
- in dieser Rohrleitung (63) sitzt ein Ventil, vorzugsweise ein Drei-Wege-Ventil (62),
- vom Ventil (62) geht ein Rohrstutzen (64) ab.
